# EUROPEAN PATENT APPLICATION

(11) **EP 3 491 917 A1**
(43) Date of publication of application: **05.06.2019**
(21) Application number: 17833627.7
(22) Date of filing: 26.07.2017
(51) Int. Cl.: A01K 25/00, A01K 27/00

(54) **APPARATUS FOR PREVENTING ANTI-SOCIAL BEHAVIOUR IN ANIMALS**

(30) Priority: 29.07.2016 ES 201600668
(71) Applicant: Universidad De Cádiz (Otri), 11001 Cádiz (ES)
(72) Inventor: BIENVENIDO BARCENA, Rafael, 11519 Puerto Real (Cádiz) (ES); RODRIGUEZ PARADA, Maria Lucia, 11519 Puerto Real (Cádiz) (ES); BENITEZ VARGAS, Alfredo, 11405 Jerez de la Frontera (Cádiz) (ES); RODRÍGUEZ PÉREZ, Francisco, 11405 Jerez de la Frontera (Cádiz) (ES); LLAMAS PIÑERO, Rogelio, 11405 Jerez de la Frontera (Cádiz) (ES); LLAMAS PIÑERO, José Manuel, 11405 Jerez de la Frontera (Cádiz) (ES)
(74) Representative: Pons
(86) International application number: PCT/ES2017/000098
(87) International publication number: WO 2018/020063

(57) **Abstract**

The invention relates to an apparatus comprising a collar inside of which is a muzzle and an apparatus for placing same. The apparatus is deployed by means of a strap that is initially placed together with a conventional leash and limited in its travel by two or more straps attached to the collar. When the apparatus is deployed, an adjustable loop is situated in a suitable position on the snout and tightens, by means of a mechanism located at the end of the apparatus, if the strap that deploys the apparatus continues to be pulled. The apparatus has various embodiments, among which are the inclusion of a device for retracting and tightening or the substitution of the deployment strap by a rigid or semi-rigid rod. The apparatus is designed particularly, but not exclusively, for dogs.

## Description

### TECHNICAL FIELD

The present invention consists of an apparatus for preventing anti-social behaviour in animals, designed particularly, but not exclusively, for dogs.

### STATE OF THE ART

Currently, the number of domestic companion animals increases every year. The current regulatory framework is adapting to this new situation, such that the access of companion animals to areas and enclosures where their presence was prohibited until not long ago is being enabled and regulated.

Therefore, there are several situations wherein an owner needs to or must use a muzzle with their dog or pet:
- Due to nervousness of the animal when it receives health care, to ensure that it does not bite the veterinarian or due to the very safety procedures adopted by the veterinarian.
- As a safety measure at dog groomers also to prevent the possible agitation of behaviour.
- For caring for the animal at home, such as cures for diseases, grooming, etc. By using this type of apparatus any type of problem is prevented.
- For preventing problems away from homes, in public areas, parks, etc.
- As required by law, since there are laws and regulations that require the use of muzzles in certain public areas, ever more widespread, and in certain situations.
- Training. On occasion, dogs exhibit inappropriate behaviour, whether it be due to agitation or because they have not been educated in that situation or behaviour. To do so, on occasion, it is necessary to use a support system to help educate or re-educate said pet.
- Aggressiveness. If the animal exhibits a behaviour-agitating phase it is advisable to use a system which prevents any type of risk.

The state of the art is made of a large variety of mechanisms for impeding bites, commonly called muzzles, although the systems on which they are based correspond to a reduced group of inventions and do not provide solutions to other types of problems associated with said product.

Two of them are the first models patented under the name "dog muzzle", one created at the beginning of the 20th century "W.H., 'DOG-MUZZLE'. DUSENBURY, NEW YORK, N. Y. Patent 872,279, 26 Nov 1907", and the other model created by Joan Veres in 1923 "J. VERES, 'DOG MUZZLE'. Pennsylvania Patent 632,940, 13 Nov 1923". These types of muzzles with a complete and rigid structure have the peculiarity that it is necessary to have several sizes in order to cover all the head sizes and the maxillofacial complexion of the animal. Another significant drawback of this type of apparatus is the discomfort for the animal, since during the period of time that the animal wears the muzzle it cannot eat or drink, and furthermore, given the dimensions of these muzzles, it cannot either make other types of natural movements.

In trying to minimise the mentioned drawback, the muzzle patented in 2002 J. Perrello, "Museliere, notamment pour chien". French Patent "EP17402A2, 23 Jan 2002", offers a solution for the comfort of the animal, thereby enabling the muzzle to be adjusted so that, when it is not necessary, it can be loosened giving the animal freedom to wear it without any limitation in its activities. Patent ES 1056676 U is in this same line.

Likewise, there are also apparatuses mainly intended for training. An example of this is the patent filed in Minneapolis under the name "Combination collar and muzzle humane training aid", patent 719,697, 11 Nov 1986 or patents "621,853, 13 Nov 1923", "US 2007 051324 A1" and "2006 158,256". These apparatuses enable the human to have control over the animal in order to restrict certain actions and in turn give the animal a certain degree of freedom. However, it does not restrict bites at all times, since without the help from the force of the person they do not impede biting. In this same line, patent WO 2005/067705 A1 has a system of straps having operations similar to the ones listed previously, incorporating, as a variation, a system for being able to house the strap of the snout when not in use; however, this system needs a large strap size in order to be able to close the apparatus, in addition to having a conventional placement system.

Among the latest patented models there is the model from 2007, "Hung-Chun Ma, 'FUNCTIONAL DOG MUZZLE STRAP STRUCTURE'. United States Patent US 2007/0028856 A1, 08 02 2007", similar to the ones that we can see on the market. It is made up of a system of straps which operate as loops but the operations and placement thereof are conventional.

Another line of development in muzzles is the one present in patents ES 1065649 U, ES 1051484 U and ES 1045225 U regarding the facilitation of a system for releasing the muzzle, in the majority of cases through a quick-release pin which enables the opening towards the sides of the muzzle.

Despite these advances from the first inventions to the most recent ones, collected in the state of the art, the muzzles or apparatuses for training are placed within the field of vision of the animal, the cooperation of the animal being necessary for the placement thereof and it is necessary to manually bring it closer to the snout of the animal for the installation thereof, bringing with it the risk of bites when the animal is nervous or does not want to cooperate.

In order to prevent this problem, there are solutions such as the patent "WO2015043435" filed in 2015. In this invention, although the conventional placement method of the apparatus is modified, the movement of the animal is very notably limited and for this reason the comfort thereof is reduced.

### DESCRIPTION OF THE INVENTION

The present invention consists of an apparatus for preventing anti-social behaviour in an animal, designed particularly, but not exclusively, for dogs, which is placed quickly and safely such that the person who places it can do so without needing to move their hand close to the mouth of the animal. This apparatus also facilitates an improved integration of the dog in society, both due to the safety provided for the owners and other people and due to the degree of freedom it grants the animal.

The apparatus has a collar, which is conventionally placed around the neck of the animal, in which the rest of the components of the apparatus are housed. This collar has an opening in all the extension thereof to enable the exit of the rest of the components of the apparatus which are deployed when a strap which moves on the head of the animal is pulled from the rear portion towards the front, preventing any possible aggression, in addition to facilitating the placement thereof.

The components which are taken out from the collar when the mentioned strap is pulled consist of an adjustable loop which acts as a muzzle joined to the collar by at least two adjustable straps, one in the upper portion and another in the lower portion, which enable the sliding of the loop and facilitate the placement thereof around the snout of the animal.

### BRIEF DESCRIPTION OF THE CONTENT OF THE DRAWINGS

Figure 1.- Deployed apparatus. It is made up of the following parts: Collar (1); Adjustable loop (2); Limiting adjustable deployment straps (3, 3a (upper) and 3b (lower)); Sliding mechanism (4); Loop housing (5); Deployment strap of the apparatus (6); Buckles for adjusting the length of the straps (8, 8a and 8b); Leash for usual securing of the animal (9).
Figure 2.- Folded apparatus. It is made up of three main parts: Adjustable loop (2), Limiting adjustable deployment straps (3a upper and 3b lower); Sliding mechanism (4); Loop housing (5); Deployment strap of the apparatus (6); Buckles for adjusting the length of the straps (8a upper and 8b lower); Leash for normal securing of the animal (9).
Figure 3.- Detail of the collar (1) with the housing for the apparatus.
Figure 4.- Apparatus in steps (a) folded; (b) deploying; (c) deployed (d) adjusting the loop on the snout.
Figure 5.- Apparatus in the different steps, schematically.
Figure 6.- Option 2. Apparatus with a system for retracting straps housed in the collar, deployed. It is made up of the following parts: Collar (1); Adjustable loop (2); Adjustable strap (3a); Sliding mechanism (4); Deployment strap of the apparatus (6); Mechanism for retracting the strap (7); Leash for normal securing of the animal (9); Housing of strap with path limitation (11).
Figure 7.- Option 2. Apparatus with system for retracting straps housed in the leash, deployed. It is made up of the following parts: Collar (1); Adjustable loop (2); Adjustable strap (3a); Sliding mechanism (4); Deployment strap of the apparatus (6); Mechanism for retracting the strap (7); Leash for normal securing of the animal (9); Housing of strap with path limitation (11).

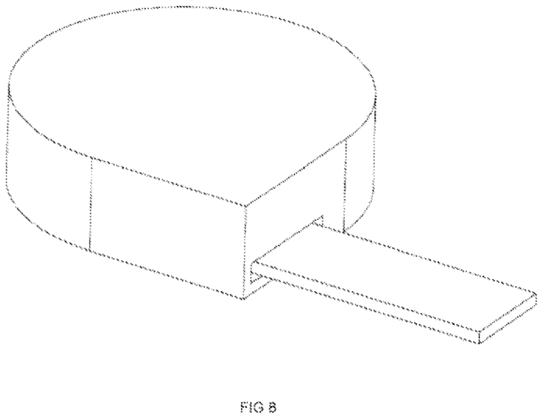

Figure 8.- Detail of the mechanism for retracting the strap.
Figure 9.- Option 3. Apparatus with rigid or semi-rigid rod for deployment, deployed. It is made up of the following parts: Collar (1); Adjustable loop (2); Limiting adjustable deployment strap (3, 3a (upper) and 3b (lower)); Leash for normal securing of the animal (9); Rigid or semi-rigid rod for deployment of the apparatus (10).
Figure 10.- Option 3. Apparatus with rigid or semi-rigid rod for deployment, folded. It is made up of the following parts: Collar (1); Adjustable loop (2); Loop housing (5); Leash for normal securing of the animal (9); Rigid or semi-rigid rod for deployment of the apparatus (10).
Figure 11.- Option 3. Apparatus in the different steps, (a) folded; (b) deploying; (c) deployed; (d) adjusting the loop on the snout and separation of the rod, schematically.
Figure 12.- Option 4. Apparatus with deploying leash which is retracted in the loop of the snout, folded. Collar (1); Leash for deploying the apparatus (6); Leash for normal securing of the animal (9).
Figure 13.- Option 4. Apparatus with deploying leash which is retracted in the loop of the snout, deployed. It is made up of the following parts: Collar (1); Adjustable loop (2); Limiting adjustable deployment straps (3, 3a (upper) and 3b (lower)); Sliding mechanism (4); Loop housing (5); Leash for deploying the apparatus (6); Buckles for adjusting the length of the straps (8, 8a (upper) and 8b (lower)); Leash for normal securing of the animal (9).
Figure 14.- Option 4. Apparatus in the different steps (a) folded; (b) deploying; (c) deployed; (d) adjusting the loop on the snout and retracted in the loop of the snout, schematically.

### EMBODIMENT OF THE INVENTION

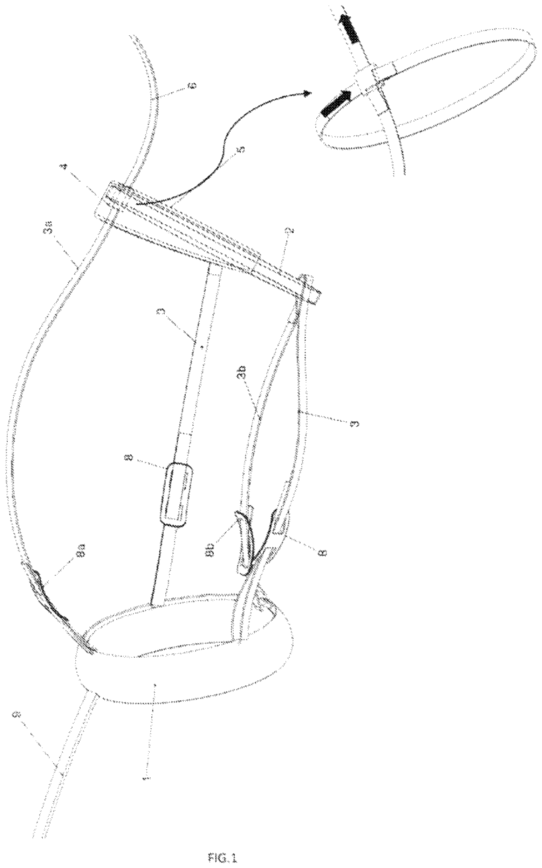

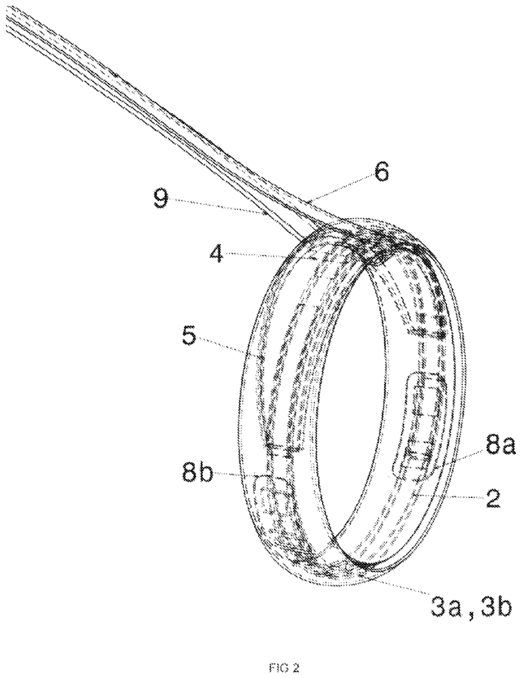

The apparatus (fig. 1) has a collar (1), which is conventionally placed around the neck of the animal, wherein the rest of the components of the apparatus are housed in the resting position (fig. 2). It has an adjustable loop (2), which, once the apparatus is taken out, is automatically placed around the snout of the animal. Two or more straps (3) with adjustable length are attached on one end to the collar, at least on the upper (3a) and lower (3b) portion thereof, and on the other end to the loop (2), such that the loop can run between these straps. These straps include a series of adjusting buckles (8) which facilitate the adaptation of the muzzle to several head (8a) and snout (8b) sizes.

The collar (1) is made up of materials that can adapt to the physique of the animal in order to increase comfort. The loop (2) is housed in part inside a sliding apparatus (5) coated with a material which offers protection and comfort to the animal once adjusted, which in turn incorporates an inner mechanism (4) which facilitates the movement of the straps quickly and without friction.

For the activation of the muzzle, the apparatus incorporates a strap (6) for manually pulling the loop (2) forward. When not in operation, this strap is joined to the ordinary leash (9) which is used to direct the animal (fig. 2). This joint can be made by means of Velcro, fasteners or any other type of joint which enables a quick separation.

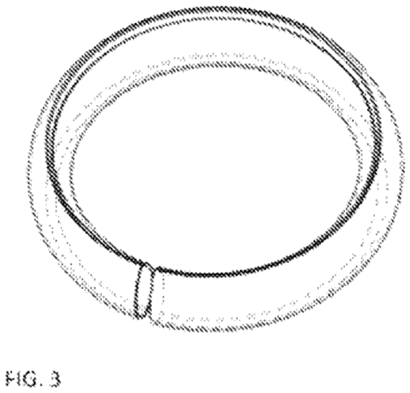

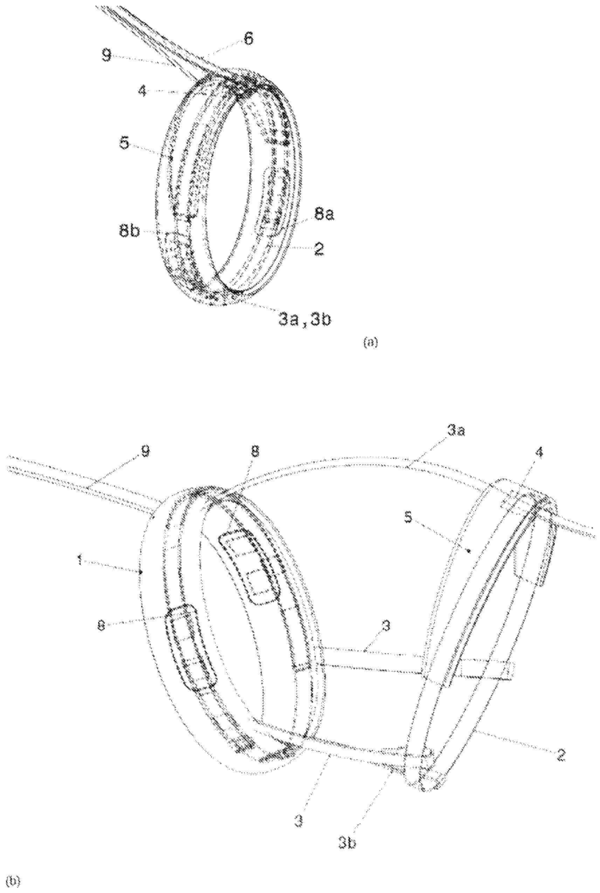

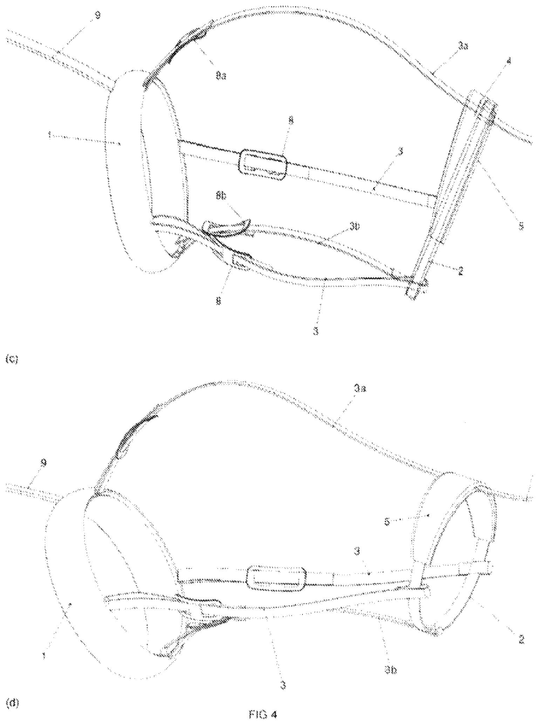

In order to correctly deploy the apparatus (fig. 4), the collar must be placed such that the strap (6) projects therefrom through the rear portion of the head of the animal. With the collar being placed correctly, it is only necessary to pull the strap (6), making it pass over the head of the animal towards the front portion, which causes the adjustable loop (2) and the straps with path limitation (3a and 3b) to come out from the inside of the collar through a slot existing therein (fig. 3).

The straps with path limitation limit the deployment of the apparatus, and with the adjustment of the suitable length, prevent the loop from exceeding the snout of the animal (Fig. 4).

The apparatus can adopt different configurations, which are mentioned in the following examples:

### Example 1: Basic configuration.

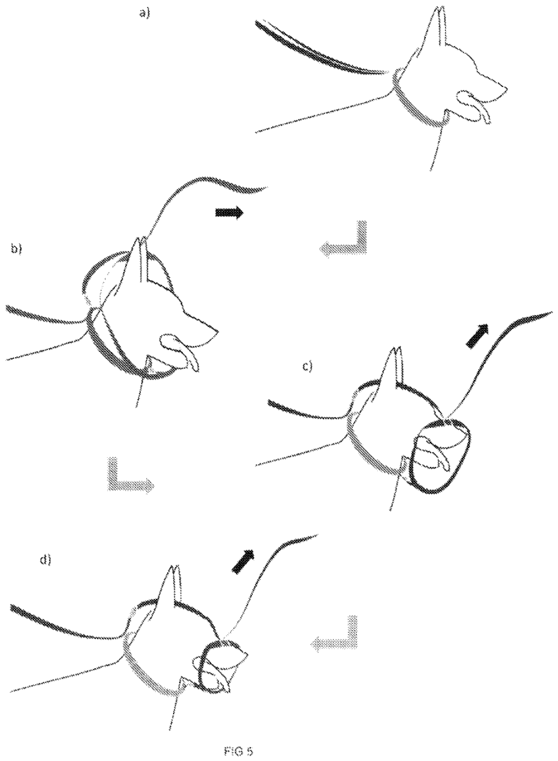

In this configuration, the adjustment of the loop to the suitable size of the snout of the animal is produced by the effects of the sliding mechanism (4), which makes it so when the leash for deploying the apparatus (6) is further pulled, the loop is retracted through the housing of the loop (5), enabling the loop to slide along the inside thereof until the dimension thereof is adjusted to the one suitable for the snout of the animal (Figures 1, 4 and 5).

### Example 2: Apparatus with manual or automatic adjustment and retracting element situated in the collar or leash.

In this option, the upper strap (3a) joining the collar with the loop and the loop (2) are made up of a single strap which passes through the inside of a fabric housing (11), enabling it to slide through the inside thereof.

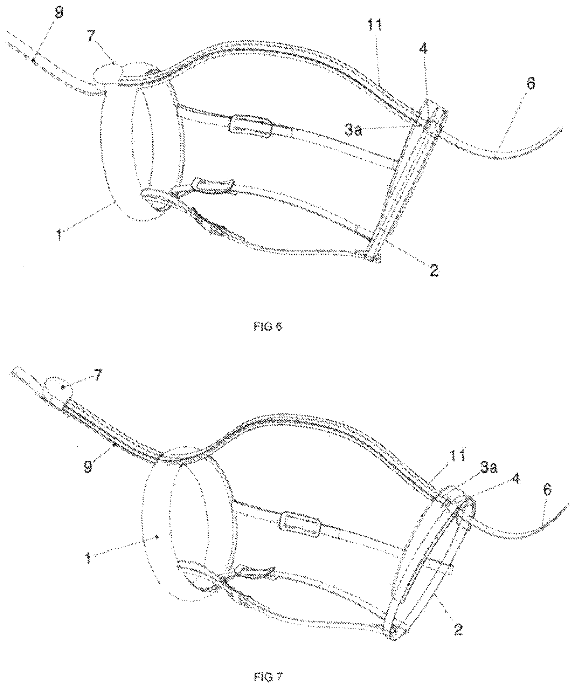

Once the apparatus is deployed by means of the strap (6) and the loop (2) is placed in the suitable position around the snout of the animal, it is possible to actuate, automatically or manually, a mechanism for retracting the strap (7) situated on the upper portion of the collar, on the rear portion of the head of the animal or on the leash thereof (figures 6 and 7). The activation and placement of the muzzle from the rear portion of the head of the animal prevents any possible aggression, in addition to facilitating the correct placement thereof.

The mechanism for retracting the strap (7) retracts the strap on the inside thereof in order to adjust the muzzle to the head of the animal, starting from the dental area of the animal in order to prevent any type of aggression in case of danger of biting. The strap is rolled up in an element joined to the collar in the upper portion thereof (rear portion of the head of the animal) or in the securing leash, which housing for the mechanism for retracting the strap has a length suitable for situating the loop in the correct position in the snout of the animal.

Once the apparatus is deployed, the tension maintained by the user in the apparatus makes the closing system of the loop to activate at the speed necessary for the animal to not be able to move its head. Optionally, the closing system can be activated by means of a button for actuating the retraction, which is done by the apparatus specifically created for the adjustment of the muzzle (7).

### Example 3: Basic configuration with rigid or semi-rigid rod.

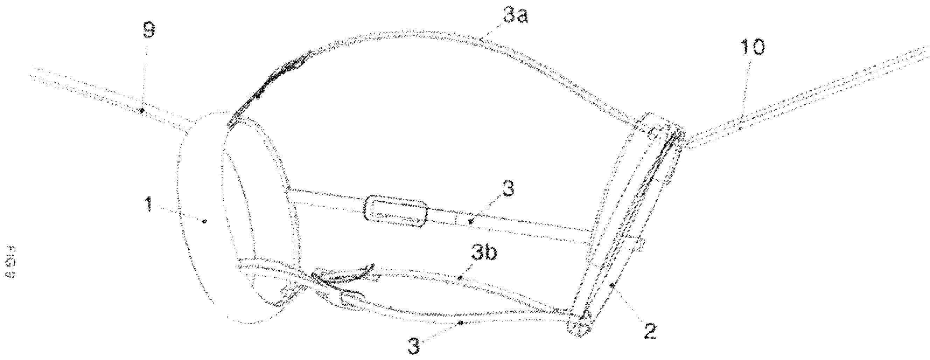

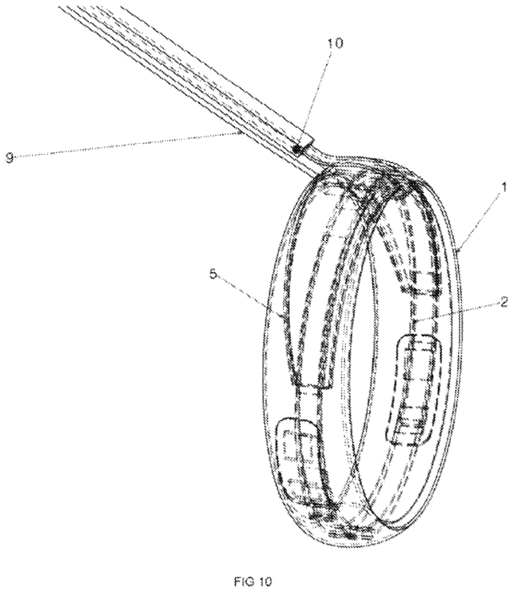

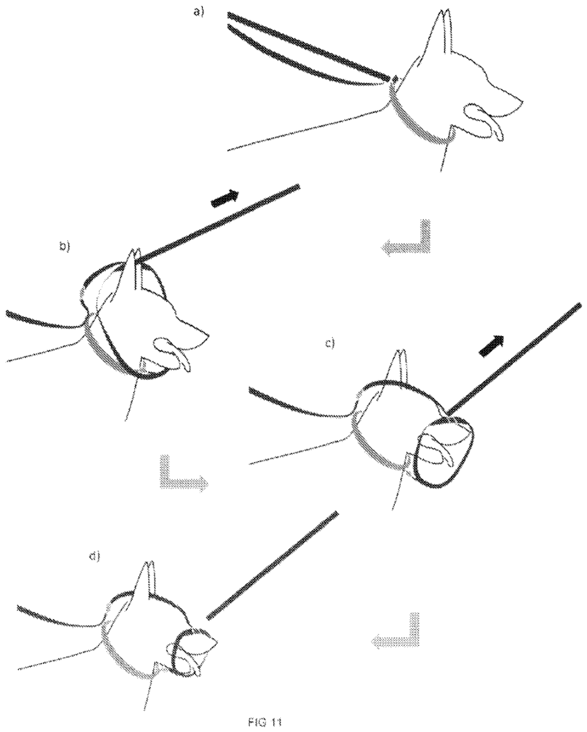

In this configuration (fig. 9), the deployment strap of the apparatus (6) is replaced with a rigid or semi-rigid rod (10) joined to the leash for securing the animal (fig. 10), which makes the adjustable loop (2) and the straps with path limitation (3) come out of the collar when it is moved over the head of the animal. Once the rod which deploys the apparatus has moved, the loop closes by means of the firing of a spring contained in the rod, until it is adjusted to the size suited for the snout of the animal and the rod is separated from the rest of the already-installed apparatus (Fig. 11).

### Example 4: Basic configuration with a short strap to be integrated in the loop.

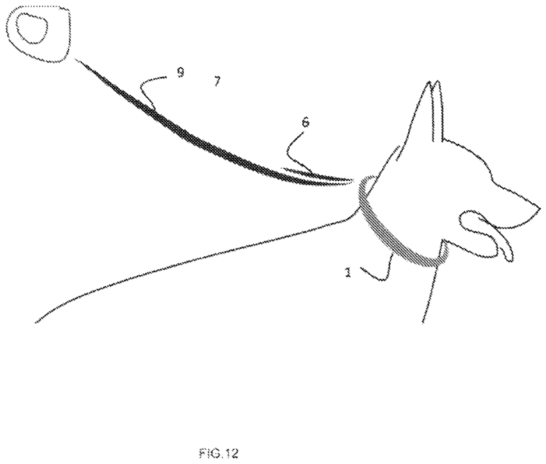

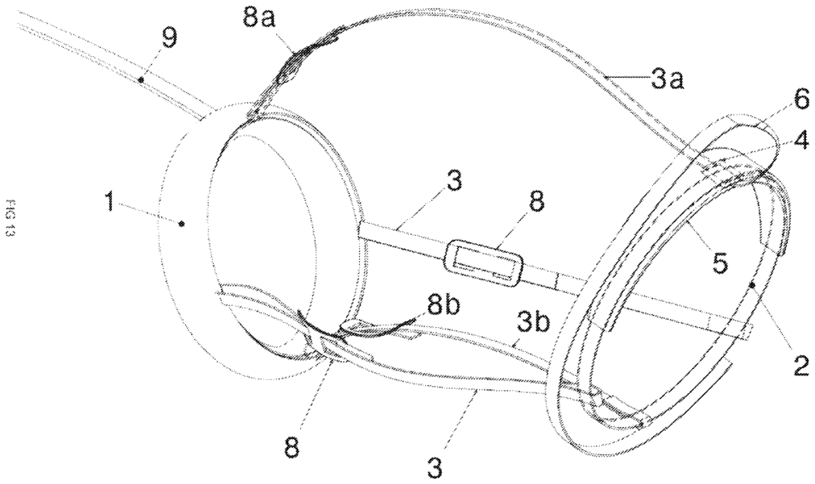

In this configuration (fig. 12), the system operates by deploying the apparatus made up of the adjustable loop (2) and the straps with path limitation from the inside of the collar (1), through a short strap (6) joined to the leash for normal securing of the animal (9). Once the strap which deploys the apparatus is moved forward (fig. 13), the loop (2) closes by continuing the pulling movement of the strap which deploys the apparatus, until it adjusts to the suitable dimension of the snout of the animal.

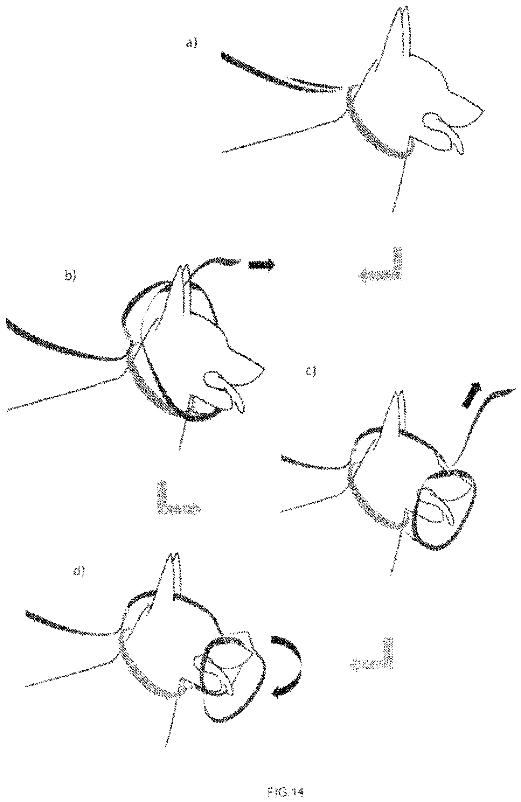

Once the muzzle is placed, the end of the strap is rolled up on the snout of the animal, or is removed from the muzzle (fig. 14).

## Claims

1. An apparatus for preventing anti-social behaviour in animals comprising:
a) A collar (1) with an opening in all of the extension thereof, wherein the rest of the components of the apparatus are housed
b) A loop (2) which acts as a muzzle, which is adjustable to the size of the snout of the animal, by means of a mechanism (4) included in a sliding apparatus (5) which enables the loop to slide along the inside thereof until it adjusts the dimension thereof to the one suitable for the snout of the animal
c) Two or more straps with adjustable length (3) are attached on one end to the collar, at least on the upper (3a) and lower (3b) portion thereof, and on the other end to the loop (2), such that the loop can run between these straps. These adjustable straps include a series of adjusting buckles (8) which facilitate the adaptation of the muzzle to several head sizes (8a) and snout sizes (8b)
d) A strap (6) which projects out of the collar, is joined to the ordinary leash (9) and acts to deploy the apparatus.

2. The apparatus for preventing anti-social behaviour in animals, according to claim 1, **characterised in that** the apparatus (figures 1 and 4) is deployed by pulling the strap (6), making it pass from the rear portion of the head of the animal to the front one through the upper portion, which makes the loop (2) automatically placing in the suitable position on the snout, by the effects of the straps with variable length (3, 3a and 3b), the loop (2) being adjusted to the suitable size of the snout of the animal when the strap (6) is further pulled which deploys the apparatus by means of the mechanism (4) inserted into the sliding apparatus (5).

3. The apparatus for preventing anti-social behaviour in animals, according to claim 1, **characterised in that** in a preferred embodiment (option 2) (figures 6 and 7) the upper strap with adjustable length (3a) which joins the collar to the loop and the loop (2) are made up of a single strap which passes along the inside of a fabric housing (11), which enables it to slide through the inside thereof, as well as a mechanism for retracting straps (7) (figure 8) situated in the portion of the collar (1) which should be situated on the rear portion of the head of the animal (figure 6), or on the leash (9) (figure 7).

4. The apparatus for preventing anti-social behaviour in animals, according to claim 1, **characterised in that** in another preferred embodiment (option 3) (figures 9, 10 and 11), the deployment strap of the apparatus (6) is replaced with a rigid or semi-rigid rod (10) joined to the leash for securing the animal which makes it so when it is moved over the head of the animal, the adjustable loop (2) and the straps with path limitation (3) come out of the collar.

5. The apparatus for preventing anti-social behaviour in animals, according to claim 4, **characterised in that** once the apparatus is deployed, the loop (2) is closed by means of the firing of a spring contained in the rod (10), until it is adjusted to the dimension suited for the snout of the animal, the rod being able to be separated from the rest of the already-installed apparatus.

6. The apparatus for preventing anti-social behaviour in animals, according to claim 1, **characterised in that** in another preferred embodiment (option 4) (figures 12, 13 and 14), the length of the strap (6) joined to the leash for normal securing of the animal (9) is smaller, such that once the adjustable loop (2) and the straps with path limitation (3) are deployed and the loop has been adjusted to the suitable size of the snout of the animal, the strap (6) is rolled up on the snout of the animal or is removed from the muzzle.
